(19) Europäisches Patentamt European Patent Office Office européen des brevets

(11) **EP 3 753 991 B1**

(12) **EUROPEAN PATENT SPECIFICATION**

(45) Date of publication and mention of the grant of the patent:
**06.03.2024 Bulletin 2024/10**

(21) Application number: **18906687.1**

(22) Date of filing: **13.11.2018**

(51) International Patent Classification (IPC):
*C09D 167/00* *(2006.01)*    *B65D 25/14* *(2006.01)*
*C09D 7/63* *(2018.01)*    *C09D 167/02* *(2006.01)*

(52) Cooperative Patent Classification (CPC):
(C-Sets available)
**B65D 23/02; B65D 23/0821; B65D 25/14;**
**C09D 5/08; C09D 167/02**    (Cont.)

(86) International application number:
**PCT/JP2018/042039**

(87) International publication number:
**WO 2019/159453 (22.08.2019 Gazette 2019/34)**

(54) **AQUEOUS COATING MATERIAL COMPOSITION**

WÄSSRIGE BESCHICHTUNGSMATERIALZUSAMMENSETZUNG

COMPOSITION AQUEUSE DE MATÉRIAU DE REVÊTEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.02.2018 JP 2018023279**

(43) Date of publication of application:
**23.12.2020 Bulletin 2020/52**

(73) Proprietor: **Toyo Seikan Group Holdings, Ltd.**
**Shinagawa-ku**
**Tokyo 141-8627 (JP)**

(72) Inventors:
• **KASHIWAKURA, Takuya**
**Yokohama-shi, Kanagawa 240-0062 (JP)**
• **SAKURAGI, Arata**
**Yokohama-shi, Kanagawa 240-0062 (JP)**
• **ZHANG, Nan**
**Yokohama-shi, Kanagawa 240-0062 (JP)**
• **YAMAMOTO, Hiromi**
**Yokohama-shi, Kanagawa 240-0062 (JP)**

(74) Representative: **J A Kemp LLP**
**80 Turnmill Street**
**London EC1M 5QU (GB)**

(56) References cited:
EP-A1- 0 792 908    EP-A1- 2 681 260
EP-A1- 2 857 465    EP-A1- 3 205 494
EP-B1- 2 681 260    WO-A1-2018/207891
JP-A- S5 117 970    JP-A- 2003 026 992
JP-A- 2003 321 646    JP-A- 2004 107 568
JP-A- 2004 339 493    JP-A- 2005 194 494
JP-A- 2008 007 627    JP-A- 2013 249 376
JP-A- 2014 514 370    US-A1- 2011 195 262

(52) Cooperative Patent Classification (CPC): (Cont.)

C-Sets
**C09D 167/02, C08K 5/20;**
**C09D 167/02, C08L 67/07, C08K 5/20**

**Description**

Technical Field:

The present invention relates to an aqueous coating composition. More particularly, the present invention relates to an aqueous coating composition capable of forming a coating excellent in workability, and further excellent in curability, corrosion resistance, and the like.

Background of the Invention:

Coating compositions used for metal containers like beverage cans or metal lids are required to have workability for withstanding severe working (e.g., necking work, beading work, scoring work, riveting work) at the time of shaping metal containers or metal lids. Further, in some applications, the compositions are required to have various properties such as favorable curability to be cured even in baking at a low temperature and/or for a short time (hereinafter, this may be referred to as "low temperature curability"). As the other properties, for instance, the composition has corrosion resistance that can prevent the corrosion of the metal matrix caused by the content, etc., does not impair the flavor of contents, and it does not allow elution of the coating components so as to provide excellent hygiene, and also excellent retort resistance. Furthermore, it is also necessary to take into account environmental pollution caused by volatilization of the organic solvent during coating or baking, the influence on the working environment, and the like.

Epoxy-based coating materials such as epoxy-phenol-based coating material, epoxy-amino-based coating material, and epoxy acrylic coating material have been widely used as coating compositions for metal containers, metal lids and the like. However, since the epoxy-based coating materials are usually produced from bisphenol-A, coating materials free of bisphenol-A are desired.

From this viewpoint, polyester-based aqueous coating compositions for a metal container or a metal lid have been proposed, and the compositions free of bisphenol-A are provided, taking environmental pollution and influences on working environments into consideration.

An example of such a polyester-based aqueous coating composition is based on an aromatic polyester resin having a carboxyl group, which has an acid value (AV) of 10 to 30 mgKOH/g and a number average molecular weight (Mn) of 3,000 to 10,000. This is combined with a curing agent, a neutralizing agent with respect to the polyester resin, and a cosolvent so as to obtain a coating material for metallic package having excellent curability and retort resistance (Patent document 1).

An example of aqueous coating composition proposed contains an acrylic modified polyester resin (C) obtained by graft polymerizing a polymerizable unsaturated monomer component (B) in a polyester resin (A), and a β-hydroxyalkylamide crosslinking agent (D), where the acrylic modified polyester resin (C) and the β-hydroxyalkylamide crosslinking agent (D) are dispersed in an aqueous medium stably. The polyester resin (A) has an ethylenic double bond at the terminals of the resin and has a number average molecular weight of 2,000 to 50,000. The polymerizable unsaturated monomer component (B) contains a carboxyl group-containing polymerizable unsaturated monomer (Patent document 2).

Patent document 3 describes a chromium-free coated metal sheet obtained by forming a coating on at least one surface of a metal sheet, and a coated metal sheet further covered with an organic resin film obtained by forming an organic resin film on the coating of the coated metal sheet, the coating thereof containing a main resin, a phenol resin as a curing agent and a tannic acid as an additive.

Patent document 4 describes a method of forming a multilayer coating film having excellent smoothness, distinctness of image, water resistance and chipping resistance. The document provides a method of forming a multilayer coating film by successively applying an aqueous intermediate coating composition, an aqueous base coating composition and a clear coating composition to a substrate; and simultaneously heat-curing the resulting intermediate coating, base coating, and clear coating, wherein the aqueous intermediate coating composition comprises as a resin component a hydroxy- and carboxy-containing polyester resin (A) having a hydroxy value in the range of 60 to 200 mgKOH/g, an acid value in the range of 10 to 60 mgKOH/g, and a number average molecular weight in the range of 700 to 5,000; a melamine resin (B) having a weight average molecular weight in the range of 500 to 4,000; and a polycarbodiimide compound (C).

Patent document 5 describes an aqueous coating composition for the manufacture of precoated metal is based on an aqueous resin having a carboxyl group in a molecule and neutralizable with a basic material, the aqueous resin being selected from an acrylic copolymer resin, polyester resin, and polyurethane resin. A mono- or poly-carbodiimide compound is blended with the aqueous resin.

Patent document 6 describes a polyester coating composition used for forming a coating film of a coated metal plate, a metal container, a metal closure, etc. The coating composition has a crosslinking agent and a curing catalyst incorporated into a mixed polyester resin comprising a mixture of a polyester resin (A) having an acid value of 2 to 50 mg KOH/g and a glass transition temperature (Tg) of 35 to 100°C and a polyester resin (B) having an acid value of 0 to 50 mg KOH/g and a glass transition temperature (Tg) of -20 to 25°C.

Patent document 7 describes an aqueous dispersion, a coating composition, coating layers and coated article made therefrom. The coating composition comprises: (1) the aqueous dispersion comprising the melt blending product of: (a) from 50 to 99 percent by weight of one or more first polyesters, based on the total solid content of the dispersion, wherein said one or more first polyesters have an acid number in the range of from less than 15, for example less than 10, or in the alternative less than 5, based on the total solid content of the one or more first polyesters; (b) from 1 to 50 percent by weight of one or more stabilizing agents comprising at least one second polyester, based on the total solid content of the dispersion, wherein said second polyester has a carboxylic acid group and an acid number equal to or greater than 15, for example greater than 20, based on the solid content of the second polyester; (c) one or more neutralizing agents; and (d) from 15 to 90 percent by weight of water, based on the total weight of the dispersion; wherein said dispersion has a solid content of 10 to 85 percent, based on the total weight of the dispersion; and (2) one or more cross-linking agents.

Prior Art Document:

Patent Document:

[Patent document 1] Japanese Patent No. 4228585
[Patent document 2] JP-A-2003-26992
[Patent document 3] EP 3 205 494 A1
[Patent document 4] US 2011/195262 A1
[Patent document 5] EP 0 792 908 A1
[Patent document 6] EP 2 857 465 A1
[Patent document 7] EP 2 681 260 A1

Summary of the Invention:

Problem to be Solved by the Invention:

However, when a phenolic resin forming a self-condensation product is used as a curing agent as in Patent document 1, hard and brittle domains derived from the self-condensation product of the phenolic resin are formed in the coating, and this often makes the workability of the coating unsatisfactory.

Further, when an acrylic modified polyester resin having a high acid value is used as in Patent document 2, the reaction point (crosslinking point) with the curing agent is increased to remarkably improve the curability, but the resin cannot withstand severe working, and sufficient workability cannot be obtained.

Accordingly, it is an object of the present invention to provide a polyester resin-based aqueous coating composition capable of forming a coating having excellent workability and excellent coating performance such as curability (low temperature curability) and corrosion resistance.

Means for Solving the Problems:

In this manner, the present invention provides an aqueous coating composition including: a polyester resin having an acid value of not less than 30 mgKOH/g and less than 70 mgKOH/g; and a curing agent (crosslinking agent) having a functional group capable of crosslinking with a carboxyl group and that is a β-hydroxyalkylamide compound, wherein the polyester resin is either an acrylic unmodified polyester resin or an acrylic modified polyester resin containing an acrylic component of less than 10 mass%; and when two or more polyester resins having different acid values are blended for use as the polyester resin, the total of the values obtained by multiplying the acid value and the mass fraction of each polyester resin is set as the average acid value of the blend, and the average acid value of the blend is not less than 30 mgKOH/g and less than 70 mgKOH/g.

It is preferable in the aqueous coating composition of the present invention that:

1. the β-hydroxyalkylamide compound is

N,N,N',N'-tetrakis(2-hydroxyethyl)adipoamide and/or
N,N,N',N'-tetrakis(2-hydroxypropyl)adipoamide;

2. the solid blend amount of the curing agent relative to 100 mass% of solids of the polyester resin is in the range of 1 to 20 parts by mass;

3. the polyester resin contains a polyester resin (A) and a polyester resin (B) having an acid value lower than that of the polyester resin (A), and the difference in the acid values of the polyester resin (A) and the polyester resin (B) is not less than 5 mgKOH/g; and

4. the acid value of the polyester resin (A) is in a range of 30 to 80 mgKOH/g, the acid value of the polyester resin (B) is not less than 5 mgKOH/g and less than 30 mgKOH/g, and the solid content mass ratio of the polyester resin (A) to the polyester resin (B) is (A): (B) =95: 5 to 5:95.

The present invention further provides a coated metal sheet having a coating including the aqueous coating composition on at least one surface of the metal sheet.

The present invention provides further a metal container or a metal lid having a coating including the aqueous coating composition.

Effect of the Invention:

As a result of intensive studies on the improvement of workability of a coating formed from a polyester-based aqueous coating composition, the present inventors have found that a coating having excellent workability to be capable of withstanding severe working can be formed by using a specific polyester resin as a base resin (main component) and a specific curing agent (crosslinking agent). Since the coating formed from the aqueous coating composition of the present invention has excellent curability and excellent corrosion resistance to achieve sufficient curability even in baking at a relatively low temperature and/or in a short time, the coating can be suitably used as a coating composition used for a metal container or a metal lid of a beverage can or the like.

Mode for carrying out the Invention:

(Polyester resin)

In the aqueous coating composition of the present invention, the polyester resin to make the base resin (main component) is required to have an acid value of not less than 30 mgKOH/g and less than 70 mgKOH/g, preferably in the range of 30 to 60 mgKOH/g, and more preferably in the range of 30 to 45 mgKOH/g, in order to achieve both excellent workability and curability.

That is, in the present invention, the polyester resin to make the base resin (main component) is required to have an appropriate amount of carboxyl groups in order to obtain both curability and workability. When the acid value is lower than the range, the amount of carboxyl group serving as a crosslinking point with the curing agent ($\beta$-hydroxy-alkylamide compound) is reduced in comparison with the case where the acid value is in the above range. This may result in inferior curability. In order to achieve sufficient curability, baking at a higher temperature and/or for a longer time is required in the coating process, and this may degrade the productivity. On the other hand, when the acid value is higher than the above range, the curability is improved due to the increased points for crosslinking with the curing agent. However, the crosslinking density becomes excessively high and the workability may deteriorate. Even in the case where the acid value is higher than the above range, it is possible to reduce the crosslinking density by adjusting the blend amount of the curing agent for instance. In this case, however, free carboxyl groups that are not used for crosslinking may remain in the coating, and this may degrade the water resistance of the coating, and as a result, sufficient corrosion resistance cannot be obtained.

In the present invention, two or more polyester resins having different acid values may be blended in use. In this case, the total of the values obtained by multiplying the acid value and the mass fraction of each polyester resin is set as the average acid value of the blend, and the average acid value of the blend is not less than 30 mgKOH/g and less than 70 mgKOH/g. When a low acid value polyester resin having an acid value of less than 5 mgKOH/g is blended, the ratio of the low acid value polyester resin to the total amount of polyester resin is less than 50 mass%, preferably not more than 40 mass%, and more preferably not more than 30 mass%. Since the low acid value polyester resin has very few carboxyl groups serving as reaction points with the curing agent, there is a high possibility that the low acid value polyester resin itself may not be easily incorporated into the crosslinking structure, and the low acid value polyester resin can remain uncrosslinked in the coating after baking even if the average acid value is set within the above range by blending with a polyester resin having a higher acid value. Therefore, when the ratio of the acid value of the low acid value polyester resin to the total of the low acid value polyester resin having an acid value of less than 5 mgKOH/g is 50 mass% or more, sufficient curability of the coating as a whole cannot be obtained, and in some cases, retort whitening cannot be prevented.

Further, in order to achieve both workability and curability of the coating at higher levels, it is preferable that the polyester resin used as the base resin is a mixed polyester resin including a polyester resin (A) and a polyester resin (B) having an acid value lower than that of the polyester resin (A) by at least 5 mgKOH/g.

The polyester resin (A) having a relatively high acid value has a relatively large amount of carboxyl groups that serve as a reaction point with a curing agent (β-hydroxyalkylamide compound). When the polyester resin (A) is used alone as the base resin, a sufficient degree of curing is easily obtained in a short time, and it results in excellent curability. However, the obtained coating tends to have a high crosslinking point density and poor workability. The polyester resin (B) having a relatively low acid value has a relatively small amount of carboxyl groups. When the polyester resin (B) is used alone as the base resin, the crosslinking point density is decreased and a coating having excellent workability is easily formed. However, the crosslinking reaction takes more time because of the reduced number of reaction points, and the baking needs more time to obtain curability, namely, the curability tends to be inferior. In contrast, when a mixed polyester resin of the polyester resin (A) and the polyester resin (B) is used, the workability of the entire coating is remarkably improved as compared with the case of using the polyester resin (A) alone, while the properties of the polyester resin (A) are strongly reflected on the curability. As a result, excellent curability can be exhibited, and it is possible to achieve both the curability and the workability at a higher level in comparison with a case where only one polyester resin is used singly.

In forming a coating having the properties described above, the difference in the acid value between the polyester resin (A) and the polyester resin (B) is 5 mgKOH/g or more as described above, preferably 5 to 60 mgKOH/g, and more preferably 10 to 50 mgKOH/g. When the difference in the acid value is less than 5 mgKOH/g, it may be difficult to obtain the above-mentioned effect by combining polyester resins having different acid value.

In order to achieve the above effects efficiently, it is required that the difference in acid value between the polyester resin (A) and the polyester resin (B) is 5 mgKOH/g or more. To meet the requirement, it is preferable that the polyester resin (A) is a polyester resin having an acid value in the range of 30 to 80 mgKOH/g, in particular 30 to 60 mgKOH/g and that the polyester resin (B) is a polyester resin having an acid value of not less than 5 mgKOH/g and less than 30 mgKOH/g, and in particular, in the range of 5 to 25 mgKOH/g. The polyester resin (A) and the polyester resin (B) are mixed preferably at a mass ratio (A) : (B) = 95:5 to 5:95, preferably 90:10 to 10:90, more preferably 90:10 to 30:70, and further preferably 80:20 to 50:50.

In the present invention, it is important that the acid value ($Av_{mix}$) of the mixed polyester resin formed by mixing the polyester resins (A) and (B), which is represented by the following equation (1), is not less than 30 mgKOH/g and less than 70 mgKOH/g.

$$Av_{mix} = [Av_A \cdot W_A / (W_A + W_B) + Av_B \cdot W_B / (W_A + W_B)] \cdots (1)$$

where $Av_{mix}$ represents the acid value (mgKOH/g) of the mixed polyester resin, $Av_A$ and $A_{VB}$ represent the acid values (mgKOH/g) of the polyester resins (A) and (B) to be used, and $W_A$ and $W_B$ represent the mass fractions of the polyester resins (A) and (B).

In the present embodiment, each of the two polyester resins (A) and (B) having an acid value difference of not less than 5 mgKOH/g may be a blend of a plurality of polyester resins. For instance, the polyester resin (A) may be a mixed polyester resin (A') formed by mixing a plurality of polyester resins, and the average acid value of the mixed polyester resin (A') may be set to have a difference of 5 or more from the acid value of the polyester resin (B).

In a case where the mixed polyester resin (A') or a mixed polyester resin (B') prepared similarly is employed, the polyester resin constituting the mixed polyester resin (A') is preferably selected from the polyester resin (A) having an acid value within the range of 30 to 80 mgKOH/g as described above. Similarly, the polyester resin constituting the mixed polyester resin (B') is preferably selected from the polyester resin (B) having an acid value of not less than 5 mgKOH/g and less than 30 mgKOH/g as described above.

Further, in the present invention, it is desirable that the polyester resin used as the base resin is an acrylic unmodified polyester resin that is not modified by an acrylic resin.

In an aqueous coating composition containing a polyester resin as a base resin, it has been widely proposed to use an acrylic modified polyester resin modified with an acrylic resin by a method such as graft polymerization of a polymerizable unsaturated monomer (ethylenically unsaturated monomer) to a polyester resin. However, the polyester resin modified with an acrylic resin tends to be inferior in the workability of a coating to be formed, and the modification may increase the number of manufacturing steps and the manufacturing cost. For this reason, the polyester resin to be used in the present invention is preferably a polyester resin that is not modified with an acrylic resin (i.e., acrylic unmodified polyester resin). In a case of using an acrylic modified polyester resin, the content (mass ratio) of the acrylic resin component (polymer component of the polymerizable unsaturated monomer) in the entire acrylic modified polyester resin is less than 10 mass%.

In the present invention, conventionally known water-dispersible or water-soluble polyester resins can be used except that they have specific acid values as described above and are acrylically unmodified.

The water-dispersible or water-soluble polyester resin is a polyester resin that contains a hydrophilic group as a component and that is dispersed or dissolved in water. These hydrophilic group components may be physically adsorbed on the surface of the polyester dispersion, but particularly preferably, they are copolymerized in the polyester resin skeleton.

Examples of the hydrophilic group include a hydroxyl group, an amino group, a carboxyl group, a sulfonic acid group, or a derivative thereof, a metal salt, and an ether. A polyester resin containing these groups in the molecules can be present in a state dispersible in water.

Specific examples of the component containing a hydrophilic group include a carboxylic anhydride such as phthalic anhydride, succinic anhydride, maleic anhydride, trimellitic anhydride, itaconic anhydride and citraconic anhydride; a hydroxyl group-containing polyether monomer such as polyethylene glycol, polypropylene glycol, glycerin, and polyglycerin; a metal salt of a sulfonic acid-containing monomer such as 5-sulfoisophthalic acid, and 4-sulfonaphthalene-2,7-dicarboxylic acid; and an ammonium salt.

In the present invention, a carboxyl group-containing polyester resin having a carboxyl group as a hydrophilic group can be suitably used as a water-soluble and/or water-dispersible polyester resin.

The monomer component to be combined with the monomer containing the hydrophilic group for the purpose of forming the water dispersible polyester resin is not particularly limited as long as it is a monomer usually used for polymerization of the polyester resin.

Polycarboxylic acid components constituting the polyester resins include: aromatic polydicarboxylic acids such as terephthalic acid, isophthalic acid, orthophthalic acid, and naphthalene dicarboxylic acid; aliphatic dicarboxylic acids such as succinic acid, glutaric acid, adipic acid, azelaic acid, sebacic acid, dodecanedioic acid, and dimeric acid; unsaturated dicarboxylic acids such as (anhydride)maleic acid, fumaric acid, and terpene-maleic acid adduct; alicyclic dicarboxylic acids such as 1,4-cyclohexanedicarboxylic acid, tetrahydrophthalic acid, hexahydroisophthalic acid and 1,2-cyclohexenedicarboxylic acid; and trihydric or higher polyvalent carboxylic acids such as (anhydrous) trimellitic acid, (anhydrous) pyromellitic acid, and methylcyclohexene tricarboxylic acid. One or more of these can be selected and used.

In the present invention, the content of the aromatic dicarboxylic acid such as terephthalic acid, isophthalic acid and naphthalenedicarboxylic acid to the polyvalent carboxylic acid component constituting the polyester resin is preferably 60 mol% or more, and particularly preferably 80 mol% or more, from the viewpoint of corrosion resistance, retort resistance, flavor property, and the like.

Examples of polyhydric alcohol components constituting the polyester resins include: aliphatic glycols such as ethylene glycol, propylene glycol(1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-occtanediol, 4-propyl-1,8-octanediol, and 1,9-nonanediol; ether glycols such as diethylene glycol, triethylene glycol, polyethylene glycol, polypropylene glycol, and polytetramethylene glycol; alicyclic polyalcohols such as 1,4-cyclohexanedimethanol, 1,3-cyclohexanedimethanol, 1,2-cyclohexanedimethanol, tricyclodecane glycols, and water-added bisphenols; and trivalent or higher polyalcohol such as trimethylolpropane, trimethylolethane, and pentaerythritol. Among them, one or a combination of two or more can be used.

In the present invention, among the above polyhydric alcohol components, ethylene glycol, propylene glycol, 1,4-butanediol, 1,4-cyclohexanedimethanol and neopentyl glycol can be suitably used as components to constitute the polyester resin, from the viewpoint of hygiene and the like.

The carboxyl group-containing polyester resin can be produced by a known method such as polycondensation of one or more of the above-described polyvalent carboxylic acid components and one or more of the polyhydric alcohol components . One example of alternative methods is depolymerization with a polyvalent carboxylic acid component such as terephthalic acid, isophthalic acid, trimellitic anhydride, trimellitic acid, and pyromellitic acid, and this method can be conducted after the polycondensation. Another example is ring-opening addition of an acid anhydride such as phthalic anhydride, maleic anhydride, trimellitic anhydride, and ethylene glycol bistrimellitate dianhydride, and this method can be conducted after the polycondensation.

The glass transition temperature (Tg) of the polyester resin is preferably in the range of -30°C to 120°C, and more preferably 25°C to 100°C. When the Tg is higher than the above range, the formed coating become hard, and this may result in inferior workability. On the other hand, when the Tg is lower than the above range, the barrier property of the coating may deteriorate and the corrosion resistance and retort resistance may be inferior.

In the present invention, two or more kinds of polyester resins having different Tg may be blended in use. By blending polyester resins having different Tg, a coating having excellent embrittlement resistance over time and impact resistance can be formed in some cases as compared with the case where only one polyester resin is used singly.

Even in such cases, there is no particular limitation on $Tg_{mix}$ of the polyester resin blend calculated by the following equation (2) as long as the $Tg_{mix}$ is within the above-mentioned Tg range.

$$1/Tg_{mix}=(W1/Tg_1)+(W2/Tg_2)+...+(Wm/Tgm)\cdots(2)$$

$$W1+W2+...+Wm=1$$

where $Tg_{mix}$ represents glass transition temperature (K) of the polyester resin blend; $Tg_1$, $Tg_2$,..., Tgm represent glass transition temperature (K) of each of the polyester resins (polyester resin 1, polyester resin 2, ..., polyester resin m) ; and W1, W2,..., Wm represent mass fraction of the respective polyester resins (polyester resin 1, polyester resin 2,..., polyester resin m).

In the aqueous coating composition of the present invention, it is preferable to use a polyester resin mixture of a polyester resin ($\alpha$) having a Tg of 35°C to 100°C and a polyester resin ($\beta$) having a Tg of -30°C to 25°C from the viewpoint of impact resistance of the coating. The mixing ratio in this case is preferably ($\alpha$) : ($\beta$) = 98:2 to 10:90, in particular 95:5 to 30:70 by mass. In addition, from the viewpoint of corrosion resistance and retort resistance, it is preferable that the glass transition temperature ($Tg_{mix}$) calculated by the above equation (2) is 30°C or more.

The number average molecular weight (Mn) of the polyester resin is preferably in the range of 1,000 to 100,000, particularly 1,000 to 50,000, though the present invention is not limited to this example. If it is smaller than this range, the coating may become brittle and the workability may be inferior. If it is larger than the above range, the coating stability may deteriorate.

The hydroxyl value of the polyester resin is preferably not more than 20 mgKOH/g, and more preferably not more than 10 mgKOH/g, though the present invention is not limited to this example. When a $\beta$-hydroxyalkylamide compound is used as the curing agent, it reacts with the carboxyl group of the polyester resin to form a crosslink. However, since this compound is considered as rarely or never reacting with the hydroxyl group, most of the hydroxyl groups of the polyester resin may remain unreacted in the coating. Therefore, when the hydroxyl value is larger than the range, there is a possibility that the remaining hydroxyl groups are increased to degrade the corrosion resistance.

The average dispersed particle size of the polyester resin in the aqueous medium of the water-dispersible or water-soluble polyester resin is preferably in the range of 10 to 1,000 nm, and particularly 20 to 500 nm.

(Curing agent)

In the present invention, it is an important feature to use a specific curing agent having a functional group capable of crosslinking with a carboxyl group of a polyester resin as a base resin.

Resol-type phenolic resins and amino resins, which are usually used as curing agents for polyester-based coating compositions, have a methylol group or an alkyl etherified methylol group as a functional group to crosslink with a hydroxyl group or a carboxyl group of the polyester resin. These functional groups react with a hydroxyl group or a carboxyl group contained in the polyester resin and form a crosslink, while a functional group tends to undergo a self-condensation reaction with the other functional groups. As a result, a hard and brittle domain composed of a self-condensation product of a resole-type phenolic resin or an amino resin may be formed in the coating, and it may cause deterioration in workability. In addition, since the reaction point (functional group) of the curing agent is consumed in the self-condensation reaction, the amount of the curing agent required to obtain sufficient curability is naturally increased to result in inefficiency. Further, the large amount of curing agent contained in the coating may adversely affect the coating properties such as workability and impact resistance. On the other hand, when a curing agent having a functional group that rarely or never undergoes self-condensation reaction is used, the formation of a hard and brittle self-condensate can be prevented or reduced, and at the same time, the minimum amount corresponding to the carboxyl group amount of the polyester resin can be blended, so that the amount of the curing agent in the coating can be reduced. As a result, a coating excellent in workability and impact resistance can be formed.

For the above-mentioned reasons, a curing agent that is a $\beta$-hydroxyalkylamide compound is used as it has a functional group that hardly induces a self-condensation reaction between the curing agents as a functional group that can be crosslinked with the carboxyl group of the polyester resin.

The functional group equivalent weight of the curing agent is preferably in the range of 30 to 600 g/eq, and particularly preferably in the range of 40 to 200 g/eq. The functional group equivalent weight in the present invention is a value obtained by dividing the molecular weight by the number of functional groups per molecule of the curing agent (the functional group herein refers to a functional group capable of crosslinking with the carboxyl group of the polyester resin as the base resin), and it means the molecular weight per one functional group of the curing agent. If the functional group equivalent is smaller than this range, the distance between the crosslinking points cannot be increased, so that the flexibility of the coating may deteriorate and the workability may be inferior. On the other hand, if it is excessively larger than the above range, the curability may be inferior.

[β-hydroxylalkylamide compound]

In the aqueous coating composition of the present invention, a β-hydroxyalkylamide compound is used as a curing agent. The β-hydroxyalkylamide compound has a β-hydroxyalkylamide group as a functional group capable of crosslinking with a carboxyl group.

As described above, the curing agent composed of the β-hydroxyalkylamide compound is efficient because its workability is not likely to be degraded by the self-condensation reaction between the curing agents, and sufficient curability can be obtained in the minimum necessary amount. Further, the amount of the curing agent in the coating can be reduced, and as a result, a coating excellent in workability can be formed. Further, unlike the case where a phenolic resin is used, there may be no possibility that the coating is colored, and a colorless and transparent coating can be formed, so that a coating excellent in appearance can be formed.

Examples of the β-hydroxyalkylamide compound used as the curing agent include those represented by the following general formula [I].

General formula [I] $[HO-CH(R_1)-CH_2-N(R_2)-CO-]_m-A-[-CO-N(R_2')-CH_2-CH(R_1')-OH]_n$

[In the formula, $R_1$ and $R_1'$ are hydrogen atoms or alkyl groups having 1 to 5 carbon atoms, $R_2$ and $R_2'$ are hydrogen atoms or alkyl groups having 1 to 5 carbon atoms or those represented by the general formula [II], "A" is a polyvalent organic group, m is 1 or 2, and n is 0 to 2 (the sum of m and n is at least 2).]

General formula [II] $HO-CH(R_3)-CH_2-$

[wherein $R_3$ represents a hydrogen atom or an alkyl group having 1 to 5 carbon atoms]

The "A" in the general formula [I] is preferably an aliphatic, alicyclic or aromatic hydrocarbon, more preferably an aliphatic, alicyclic or aromatic hydrocarbon having 2 to 20 carbon atoms, and further preferably an aliphatic hydrocarbon having 4 to 10 carbon atoms.

The sum of m and n in the general formula [I] is preferably 2 or 3 or 4.

Among the β-hydroxyalkylamide compounds used as a curing agent and represented by the above general formula [I], preferred examples include:

N,N',N',N'-tetrakis(2-hydroxyethyl)adipoamide [CAS: 6334-25-4, molecular weight: about 320, number of functional groups per molecule: 4, functional group equivalent (theoretical): about 80 g/eq, product example: Primid XL552 manufactured by EMS-GRILTECH Corporation], and

N,N,N',N'-tetrakis(2-hydroxypropyl)adipoamide [CAS: 57843-53-5, molecular weight: about 376, number of functional groups per molecule: 4, functional group equivalent (theoretical): about 95 g/eq, product example: Primid QM1260 manufactured by EMS-GRILTECH]. Among them, N,N,N',N'-tetrakis(2-hydroxypropyl)adipoamide is furhter preferred from the viewpoints of curability and retort resistance. Compared to N,N,N',N'-tetrakis(2-hydroxyethyl)adipoamide, N,N,N',N'-tetrakis(2-hydroxypropyl)adipoamide has higher reactivity with polyester resins, and it is superior in curability. In addition, the N,N,N',N'-tetrakis(2-hydroxypropyl)adipoamide forms a denser crosslinked structure, whereby the coating is rarely whitened even at a time of retorting. As a result, a coating excellent in retort resistance can be formed.

The curing agent (solid content) is desirably blended in an amount of 1 to 20 parts by mass, preferably 3 to 15 parts by mass, and more preferably 4 to 10 parts by mass relative to 100 parts by mass of the polyester resin (solid content) . When the blend amount of the curing agent is smaller than this range, sufficient curability cannot be obtained. When the blend amount of the curing agent is larger than this range, it may be difficult for one molecule of the curing agent to react with two or more molecules of the polyester resin in a case where the functional group of the curing agent is excessive with respect to the carboxyl group amount of the polyester resin. This may cause deficiency in crosslink formation, and the curability may deteriorate. In addition, the stability of long-term storage may be inferior.

A β-hydroxyalkylamide compound is used as the curing agent. It is desirable that the amount of hydroxyl groups derived from β-hydroxyalkylamide groups to the carboxyl groups in the polyester resin (OH group/COOH group molar ratio) is in the range of 0.3 to 3.0 times equivalent, preferably 0.5 to 2.5 times equivalent, and more preferably 0.7 to 2.0 times

equivalent.

(Aqueous coating composition)

The aqueous coating composition of the present invention contains at least the specific polyester resin as the base resin (main component) and curing agent both described above, and an aqueous medium. In the aqueous coating composition of the present invention, a component contained in the largest amount (mass ratio) among solid components (nonvolatile components excluding volatile substances such as water and solvent) forming a coating in the aqueous coating composition is defined as the base resin (main component) . The solid component to form a coating means a component to form a continuous layer as a coating by baking that is conducted after coating. Components that do not form a continuous layer, for example, inorganic pigments, inorganic particles (fillers) and the like, do not correspond to these components.

(Aqueous medium)

Examples of the aqueous medium that can be used here include water and a mixture of water and an organic solvent such as an alcohol, a polyhydric alcohol or a derivative thereof, similarly to the known aqueous coating compositions.
When an organic solvent is used, it is preferably contained in an amount of 1 to 45 mass%, and particularly preferably in an amount of 5 to 30 mass%, relative to the amount of the entire aqueous medium in the aqueous coating composition. When the content of the solvent is in this range, the film forming performance can be improved.
Such organic solvents are preferably amphiphilic, and the examples include methyl alcohol, ethyl alcohol, isopropyl alcohol, n-butanol, ethylene glycol, methyl ethyl ketone, butyl cellosolve, carbitol, butyl carbitol, propylene glycol monopropylene ether, propylene glycol ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, and 3-methyl3-methoxybutanol.

(Basic compound)

The aqueous coating composition of the present invention preferably contains a basic compound capable of neutralizing the carboxyl group of the polyester resin in order to improve the water dispersibility of the polyester resin. As the basic compound, a compound that volatilizes in baking at the time of forming a coating, that is, ammonia and/or an organic amine compound having a boiling point of not more than 250°C or the like, is preferred.
Specific examples thereof include: alkylamines such as trimethylamine, triethylamine, and n-butylamine; alcohol amines such as 2-dimethylaminoethanol, diethanolamine, triethanolamine, aminomethylpropanol, and dimethylaminomethylpropanol. Also, polyvalent amines such as ethylenediamine and diethylenetriamine can be used. In addition, amines having branched alkyl groups and heterocyclic amines are also suitably used. As the amine having a branched chain alkyl group, branched chain alkylamine having 3 to 6 carbon atoms, particularly 3 to 4 carbon atoms is used, and the examples include isopropylamine, sec-butylamine, tert-butylamine, and isoamylamine. As the heterocyclic amine, a saturated heterocyclic amine containing one nitrogen atom is used, and the examples include pyrrolidine, piperidine, and morpholine.
Among them, triethylamine, or 2-dimethylaminoethanol can be suitably used in the present invention. The use amount is preferably 0.5 to 1.5 equivalents relative to the carboxyl group.

(Lubricant)

The aqueous coating composition of the present invention may contain a lubricant as necessary. It is preferable to add 0.1 to 10 parts by mass of the lubricant to 100 parts by mass of the polyester resin. By adding the lubricant, it is possible to prevent or reduce scratching of the coating at the time of shaping the can lid or the like, and it is possible to improve the slidability of the coating at the time of shaping.
Examples of the lubricant that can be added to the aqueous coating composition of the present invention include a fatty acid ester wax that is an esteride of a polyol compound and a fatty acid, a silicon-based wax, a fluorine-based wax such as polytetrafluoroethylene, a polyolefin wax such as polyethylene, a lanolin-based wax, a montan wax, a microcrystalline wax, a carnaba wax, and a silicon-based compound. These lubricants can be used alone or as a mixture of two or more lubricants.

(Other)

In addition to the above components, components that can be blended in conventional coating compositions such as leveling agents, pigments, and antifoaming agents can be added to the aqueous coating composition of the present invention in accordance with conventionally known formulations. In addition, other resin components may be included together with the polyester resin in an amount not to hinder the object of the present invention. The examples include water-dispersible or water-soluble resins such as polyvinyl acetate, ethylene·vinyl acetate copolymer, polyolefin-based resin, epoxy resin, polyurethane resin, acrylic resin, phenolic resin, melamine resin, polyvinyl chloride-based resin, polyvinyl chloride-vinyl acetate copolymer resin, polyvinyl alcohol, ethylene·vinyl alcohol copolymer, polyvinylpyrrolidone, polyvinylethyl ether, polyacrylamide, an acrylamide-based compound, polyethyleneimine, starch, gum arabic, and methylcellulose.

The aqueous coating composition of the present invention preferably contains the polyester resin in an amount of 5 to 55 mass% as a solid content. When the resin solid content is smaller than this range, it may be impossible to maintain an appropriate amount of the coating, and the covering property may become inferior. On the other hand, when the resin solid content is larger than this range, the stability, workability, and coatability of the coating material may deteriorate. Further, the amount of the coating may be excessive, and this may cause popping at the time of baking.

The aqueous coating composition of the present invention is coated on a metal sheet or a preformed metal container by a known coating method such as roll coater coating, spray coating, and dip coating, and baked by a heating means such as a coil oven, so that the composition can be used.

The conditions for baking the aqueous coating composition of the present invention are appropriately adjusted according to the type of the polyester resin, the curing agent, the metallic materials, the coating amount and the like. The aqueous coating composition of the present invention is preferably heated and cured at a temperature of 150°C to 320°C, preferably 180°C to 300°C, for 5 seconds to 30 minutes, preferably 8 seconds to 180 seconds, in order to obtain sufficient curability.

The thickness of the coating to be formed is preferred to be less than 30 um, preferably in the range of 0.5 to 20 um, more preferably 1 pm to 15 um, and further preferably not less than 1 um and less than 10 um in terms of the dry thickness. A coating thicker than this range may be inferior from the economic viewpoint. And the baking time required to sufficiently cure the coating may be increased, and this may degrade the productivity. On the other hand, when the coating is thinner than this range, the covering property of the coating may be inferior.

(Coated metal sheet)

The aqueous coating composition of the present invention can be coated on a metal sheet by a known coating method such as roll coater coating, spray coating and dip coating, and baked by a heating means such as an oven so as to obtain a coated metal sheet.

Examples of the metal sheet include hot-rolled steel sheet, cold-rolled steel sheet, steel sheet plated with molten zinc, steel sheet electrically plated with zinc, steel sheet plated with an alloy, steel sheet plated with an aluminum-zinc alloy, aluminum sheet, tin-plated steel sheet, stainless steel sheet, copper sheet, steel sheet plated with copper, tin-free steel sheet, nickel-plated steel sheet, very thin tin-plated steel sheet and chromium-treated steel sheet, though the present invention is not limited to these examples. These steel sheets may be subjected to various surface treatments such as phosphoric acid chromate treatment and zirconium-based chemical conversion treatment as required.

Further, a thermoplastic resin film such as a polyester resin film may be laminated as an organic resin coating layer on the coating of the coated metal sheet so as to form an organic resin coated metal sheet.

(Coated metal containers)

A coated metal container can be obtained by forming a coating of the aqueous coating composition of the present invention on the inner surface and/or the outer surface of the metal container. Since the aqueous coating composition of the present invention is particularly excellent in workability and corrosion resistance, a coating made of the coating composition of the present invention is preferably formed on at least the inner surface of the metal container.

Any conventionally known metal containers can be used as the metal container with the coating thereon, and the examples include a three-piece can having a side seam and a seamless can (two-piece can) though the present invention is not limited thereto.

The coated metal container can be obtained by shaping the above-mentioned coated metal sheet. In a case of a metal container such as a seamless can formed by a severe working, it is preferable to obtain the coated metal container of the present invention by applying the aqueous coating composition to the preformed metal container by a method such as spray coating. Alternatively, an organic resin coating layer is formed on the coating metal sheet, and the thus obtained organic resin coated metal sheet can be shaped into a metal container like a seamless can.

(Coated metal lid)

A coated metal lid can be obtained by shaping the above-described coated metal sheet coated with the aqueous coating composition of the present invention by any conventionally known methods for manufacturing lids. The lid can be used as a stay-on-tab type easy-open can lid or a full-open type easy-open can lid, for instance.

Examples:

Hereinafter, the present invention will be described in detail with reference to Examples. In the Examples, the term "part" or "parts" represents "part(s) by mass".
Methods for measurement of each acrylic unmodified polyester resin are described below.

(Measurement of number average molecular weight)

A polyester resin solid was measured by gel permeation chromatography (GPC) using a standard polystyrene calibration curve.

(Measurement of glass transition temperature)

The polyester resin solid was measured by differential scanning calorimetry (DSC) at a temperature rise rate of 20°C/min.

(Measurement of acid value)

The polyester resin solid (0.2 g) was dissolved in 20 ml chloroform and titrated with 0.1 N of a KOH ethanol solution to determine the resin acid value (mgKOH/g). Phenolphthalein was used as the indicator. In a case where the polyester resin was not dissolvablein the solvent, tetrahydrofuran or the like was used for a solvent.

(Measurement of monomer composition)

The polyester resin solid (30 mg) was dissolved in 0.6 ml dichloroform. This was subjected to a 1H-NMR measurement, and monomer compositional ratio was determined from the peak intensities. The composition ratio was determined except for a trace amount of components (less than 1 mol% with respect to all monomer components).

(Preparation of coated metal sheets)

The aqueous coating compositions of Examples, Comparative Examples, and Reference Examples were coated on aluminum sheets each having a surface treated with chromic phosphate (Alloy 3104, sheet thickness: 0.28 mm, weight of chromium in the surface-treatment coating: 20 mg/m$^2$) by a bar coater so that the coating would have a predetermined thickness after the baking, and baked in an oven at a predetermined baking temperature and for a predetermined time to prepare a coated metal sheet. The coating conditions are shown in Tables 1-3. In Examples 1-5, Comparative Examples 1-2 and Reference Examples 1-2, the baking temperature (temperature in the oven) was set to 200°C, the baking time was set to 90 seconds, and the dried coating thickness after the baking was set to 1.5 um. In Examples 6-15, Comparative Examples 3-6 and Reference Examples 3-6, the baking temperature (temperature in the oven) was set to 250°C, the baking time was set to 60 seconds, and the dried coating thickness after the baking was set to 9.0 $\mu$m. The thus coated metal sheets were subjected to various evaluations according to the following evaluation methods.

(Curability)

Curability of the coated metal sheet was evaluated in terms of MEK extraction rate. A sample of 5 cm $\times$ 5 cm was cut out from the coated metal sheet. The sample was measured for its mass (W1) and subjected to extraction for 1 hour under a reflux at 80°C, using 200 ml MEK (methyl ethyl ketone) . After the extraction, the coated sheet was dried at 130°C for 1 hour, and the mass (W2) of the sample was measured. Further, the coating was peeled off by a decomposition method using concentrated sulfuric acid, and the mass (W3) of the sample was measured. The MEK extraction rate of the coated sheet can be obtained by the following equation (3).

$$\text{MEK extraction rate (\%)} = 100 \times (W1-W2)/(W1-W3) \cdots (3)$$

The evaluation criteria in Table 1 (Examples 1-5, Comparative Examples 1-2 and Reference Examples 1-2) are as follows.

◎: less than 15%
○: 15% or more and less than 25%
△: 25% or more and less than 40%
✕: 40% or more

The evaluation criteria in Table 2 (Examples 6-10, Comparative Examples 3-6 and Reference Example 3) are as follows.

◎: less than 10%
○: 10% or more and less than 15%
△: 15% or more and less than 20%
✕: 20% or more

The evaluation criteria in Table 3 (Examples 11-15 and Reference Examples 4-6) are as follows.

A: less than 10%
B: 10% or more and less than 20%
C: 20% or more

(Workability)

The coated metal sheet was cut into a size of 3.5 × 3 cm in a manner that the aluminum sheet had the long side in the direction to be rolled. The thus obtained test piece was folded in parallel relative to the short sides so that the coated surface would face outward. As spacers, a predetermined number of aluminum sheets each having a thickness of 0.28 mm were placed inside the bent portion (two aluminum sheets in Examples 1-10, Comparative Examples 1-6 and Reference Examples 1-3; a piece of aluminum sheet in Examples 11-15 and Reference Examples 4-6) . Each of the test pieces was folded by applying impact with a seam-fold type du Pont impact tester in an atmosphere of 25°C, thereby being folded. An iron weight having a flat contact surface for the impact bending weighed 3 kg. This weight was dropped from a height of 40 cm. The folded end portion was brought over a width of 2 cm into contact with a sponge immersed in a 1% sodium chloride aqueous solution. A voltage of 6.3 V was applied to the end portion, and a current value (mA) was measured after 4 seconds.

The evaluation criteria in Table 1 (Examples 1-5, Comparative Examples 1-2 and Reference Examples 1-2) are as follows.

◎: less than 5 mA
○: 5 mA or more and less than 10 mA
△: 10 mA or more and less than 30 mA
✕: 30 mA or more

The evaluation criteria in Table 2 (Examples 6-10, Comparative Examples 3-6, and Reference Example 3) are as follows.

◎: less than 1 mA
○: 1 mA or more and less than 3 mA
△: 3 mA or more and less than 10 mA
✕: 10 mA or more

The evaluation criteria in Table 3 (Examples 11-15, and Reference Examples 4-6) are as follows.

A: less than 1 mA
B: 1 mA or more and less than 3 mA
C: 3 mA or more

(Corrosion Resistance)

A test piece having a size of 5 cm × 5 cm was cut out from the coated metal sheet, and then immersed in a model liquid as a simulated liquid of the can contents, thereby evaluating visually the degree of corrosion according to the following criteria. The immersion conditions were set to 50°C for 14 days. The model liquid used for the test was prepared by adding citric acid to 0.2% sodium chloride to have a pH of 2.5. The results are shown in Table 1. The evaluation criteria are as follows.

　　○: no corrosion
　　△: partly corroded
　　×: mostly corroded

[Preparation of aqueous coating composition]

(Example 1)

Polyester resin "a" was used as the polyester resin, and N,N,N',N'-tetrakis(2-hydroxypropyl)adipoamide was used as the β-hydroxyalkylamide compound for a curing agent. The polyester resin "a" is an acrylic unmodified polyester resin (acid value: 36 mgKOH/g, Tg: 80°C, Mn=5,000, monomer composition: terephthalic acid component / ethylene glycol component / propylene glycol component = 50/14/36 mol%). The N,N,N',N'-tetrakis(2-hydroxypropyl)adipoamide is Primid QM1260 manufactured by EMS-GRILTECH (this is designated as "β-hydroxyalkylamide A" in the table). 333 parts (solid content: 100 parts) of a water dispersion liquid of the polyester resin "a" (solid content concentration: 30 mass%), 50 parts (solid content: 5 parts) of an aqueous solution of the β-hydroxyalkylamide compound prepared in advance using ion-exchange water (solid content concentration: 10 mass%) , 150 parts of 2-propanol, and 517 parts of ion-exchange water were introduced into a glass container and agitated for 10 minutes, thereby obtaining an aqueous coating composition having a solid content concentration of 10 mass%, and a solid blend ratio of polyester resin / curing agent = 100/5 (mass ratio).

(Examples 2-5 and Comparative Examples 1-2)

An aqueous coating composition was prepared in the same manner as in Example 1, except that the polyester resin was replaced by the various polyester resins (all of which were acrylic unmodified polyester resins) or the solid distribution ratio was changed as indicated in Table 1. As the polyester resins, polyester resin "b" (acrylic unmodified resin having acid value: 31 mgKOH/g, Tg: 40°C, Mn=5,000), polyester resin "c" (acrylic unmodified resin having acid value: 17 mgKOH/g, Tg: 40°C, Mn=8,500, monomer composition: terephthalic acid component / isophthalic acid component / adipic acid / ethylene glycol component / neopentyl glycol component = 28/15/7/25/25 mol%), and polyester resin "d" (acrylic unmodified resin having acid value: 75 mgKOH/g, Tg: 80°C, Mn=3,000) were used. In Example 5, N,N,N',N'-tetrakis(2-hydroxyethyl)adipoamide (Primid XL552 manufactured by EMS-GRILTECH; designated as "β-hydroxyalkylamide B" in the table) was used as the β-hydroxyalkylamide compound.

(Reference Example 1)

An aqueous coating composition was prepared in the same manner as in Example 1 except that polyester resin "e" (Tg: 50°C, acid value: 30 mgKOH/g, content of acrylic component: 40 mass%) was used as the polyester resin. This polyester resin "e" was an acrylic modified polyester resin modified with an acrylic resin.

(Reference Example 2)

A polyester resin "a" was used as the polyester resin, and a resol-type phenolic resin was used as the curing agent. As the resole-type phenolic resin, a methcresol-based phenolic resin containing a butyl-etherified methylol group (the ratio of etherified methylol groups: 90 mol%, Mn=1, 600) was used. An aqueous coating composition (solid concentration: about 10 mass%, solid distribution ratio: polyester resin / curing agent = 100/15) was prepared using 333 parts of aqueous dispersion of polyester resin "a" (solid content: 100 parts), 30 parts of n-butanol solution of the resole-type phenolic resin (solids content: 15 parts), 1 part of dodecylbenzenesulfonic acid (curing catalyst), 0.3 parts of triethylamine, 200 parts of 2-propanol, and 635 parts of ion-exchange water. As the dodecylbenzenesulfonic acid, "dodecylbenzenesulfonic acid (soft type) (mixture)" manufactured by Tokyo Chemical Industry Co., Ltd. was used.

(Example 6)

Polyester resin "a" was used as the polyester resin, and N,N,N',N'-tetrakis(2-hydroxypropyl)adipoamide [Primid QM1260 manufactured by EMS-GRILTECH; designated as "β-hydroxyalkylamide A" in the table] was used as the β-hydroxyalkylamide compound of the curing agent. 333 parts (solid content: 100 parts) of the aqueous dispersion of polyester resin "a" (resin solid concentration: 30 mass%, 2-propanol concentration: 18 mass%) and 16.7 parts (solid concentration: 5 parts) of an aqueous solution of the β-hydroxyalkylamide compound (solid concentration: 30 mass%) adjusted in advance using ion-exchange water were introduced into a glass container and agitated for 10 minutes to obtain an aqueous coating composition having a solid concentration of 30 mass% and a solid blend ratio of polyester resin / curing agent = 100/5 (mass ratio).

(Examples 7-10 and Comparative Examples 3-6)

An aqueous coating composition was prepared in the same manner as in Example 6, except that the polyester resin was replaced by the various polyester resins (all of which were acrylic unmodified resins) or the solid distribution ratio was changed as indicated in Table 2.
As the polyester resin, polyester resin "f" was used in Example 9, and polyester resin "g" was used in Example 10. The polyester resin "f" was an acrylic unmodified resin (acid value: 50 mgKOH/g, Tg: 46°C, Mn=3,000, monomer composition: terephthalic acid component / isophthalic acid component / sebacic acid component / trimellitic acid component / ethylene glycol component / neopentyl glycol component / 1,4-butanediol component = 36/9/4/1/9/25/16 mol%) and the polyester resin "g" was acrylic unmodified resin (acid value: 60 mgKOH/g, Tg: 70°C, Mn=3,000).

(Reference Example 3)

An aqueous coating composition was prepared in the same manner as in Example 6 except that polyester resin "e", which is an acrylic modified polyester resin modified with an acrylic resin, was used as the polyester resin.

(Example 11)

Polyester resin (A) used here was polyester resin (A)-a (acrylic unmodified resin, acid value: 50 mgKOH/g, Tg:46°C, Mn=3,000, monomer composition: terephthalic acid component / isophthalic acid component / sebacic acid component / trimellitic acid component / ethylene glycol component / neopentyl glycol component / 1,4-butanediol component = 36/9/4/1/9/25/16 mol%). Polyester resin (B) used here was polyester resin (B)-a (acrylic unmodified resin, acid value: 23 mgKOH/g, Tg: 80°C, Mn=8,000, monomeric composition: terephthalic acid component / ethylene glycol component / propylene glycol component = 50/10/40 mol%). The β-hydroxyalkylamide compound as the curing agent was N,N,N',N'-tetrakis(2-hydroxypropyl)adipoamide [Primid QM1260 manufactured by EMS-GRILTECH; designated as "β-hydroxyalkylamide A in the table]. A water dispersion liquid (solid concentration: 30 mass%, 2-propanol concentration: 18 mass%) of a mixed polyester resin (Av$_{mix}$: 36.5 mgKOH/g, Tg$_{mix}$: 62.1°C) was prepared by mixing the water dispersion liquid of the polyester resin (A) and the water dispersion liquid of the polyester resin (B) at a solid mass ratio of 50:50. And an aqueous solution of β-hydroxyalkylamide compound (solid content concentration: 30 mass%) was adjusted in advance by using ion-exchange water. 333 parts of the water dispersion liquid (solid content: 100 parts) and 24 parts of the aqueous solution (solid content: 8 parts) were introduced into a glass container and agitated for 10 minutes to obtain an aqueous coating composition having a solid content concentration of 30 mass%, the solid blend ratio: polyester resin / curing agent = 100/8 (mass ratio).

(Examples 12-15 and Reference Examples 4-6)

An aqueous coating composition was prepared in the same manner as in Example 11 except that the type of polyester resin and the solid blend ratio were changed as shown in Table 3. Other than the polyester resins as mentioned above, polyester resin (A)-b was used as the polyester (A), and polyester resin (B)-b, polyester resin (B)-c and polyester resin (B)-d were used as the polyester resin (B). The polyester resin (A)-b was acrylic unmodified resin (acid value: 36 mgKOH/g, Tg: 80°C, Mn=5,000, monomer composition: terephthalic acid component / ethylene glycol component / propylene glycol component = 50/14/36 mol%). The polyester resin (B)-b was acrylic unmodified resin (acid value: 17 mg KOH/g, Tg: 40°C, Mn=8,500, monomer composition: terephthalic acid component / isophthalic acid component / adipic acid / ethylene glycol component / neopentyl glycol component = 28/15/7/25/25 mol%). The polyester resin (B)-c was acrylic unmodified resin (acid value: 5 mg KOH/g, Tg: 52°C, Mn=17,000, monomer composition: terephthalic acid component / isophthalic acid component / adipic acid component / ethylene glycol component / neopentyl glycol component = 23/23/4/24/26 mol%). And, the polyester resin (B)-d was acrylic unmodified resin (acid value: 11 mgKOH/g, Tg: -25°C, Mn=17,000, monomer composition: terephthalic acid component / isophthalic acid component / sebacic acid component / 1,4-butanediol component = 14/17/19/50 mol%).

Tables 1, 2, and 3 show the composition of each aqueous coating composition (type of polyester resin, type of curing agent, solid blend ratio), coating conditions, and evaluation results.

[Table 1]

| | | | Tg (°C) | Acid value (mgKOH/g) | Mn | Example | | | | | Comparative Example | | Reference Example | |
|---|---|---|---|---|---|---|---|---|---|---|---|---|---|---|
| | | | | | | 1 | 2 | 3 | 4 | 5 | 1 | 2 | 1 | 2 |
| 1* | 4* | a | 80 | 36 | 5,000 | 100 | | 100 | 100 | 100 | | | | 100 |
| | | b | 40 | 31 | 5,000 | | 100 | | | | | | | |
| | | c | 40 | 17 | 8,500 | | | | | | 100 | | | |
| | | d | 80 | 75 | 3,000 | | | | | | | 100 | | |
| | | e | 50 | 30 | - | | | | | | | | 100 | |
| | 5* | β-hydroxyalkylamide A | | | | 5 | 5 | 10 | 15 | | 5 | 5 | 5 | |
| | | β-hydroxyalkylamide B | | | | | | | | 5 | | | | |
| | | Phenolic resin | | | | | | | | | | | | 15 |
| 2* | Baking temperature (°C) | | | | | 200 | 200 | 200 | 200 | 200 | 200 | 200 | 200 | 200 |
| | Baking time (second) | | | | | 90 | 90 | 90 | 90 | 90 | 90 | 90 | 90 | 90 |
| | Coating thickness (μm) | | | | | 1.5 | 1.5 | 1.5 | 1.5 | 1.5 | 1.5 | 1.5 | 1.5 | 1.5 |
| 3* | Curability | | | | | ◎ | ○ | ◎ | ○ | ◎ | × | ○ | ◎ | ◎ |
| | Workability | | | | | ◎ | ◎ | ◎ | ○ | ◎ | ◎ | × | × | × |
| | Corrosion resistance | | | | | ○ | ○ | ○ | ○ | ○ | △ | ○ | × | ○ |

1*: Aqueous coating composition blend ratio
2*: Coating condition
3*: Evaluation
4*: Polyester resin
5*: Curing agent

[Table 2]

| | | | Tg (°C) | Acid value (mgKOH/g) | Mn | Example | | | | | Comparative Example | | | | Ref. Ex. |
|---|---|---|---|---|---|---|---|---|---|---|---|---|---|---|---|
| | | | | | | 6 | 7 | 8 | 9 | 10 | 3 | 4 | 5 | 6 | 3 |
| 1* | 4* | a | 80 | 36 | 5,000 | 100 | 100 | | | | | | | | |
| | | b | 40 | 31 | 5,000 | | | 100 | | | | | | | |
| | | f | 46 | 50 | 3,000 | | | | 100 | | | | | | |
| | | 9 | 70 | 60 | 3,000 | | | | | 100 | | | | | |
| | | c | 40 | 17 | 8,500 | | | | | | 100 | 100 | | | |
| | | d | 80 | 75 | 3,000 | | | | | | | | 100 | 100 | |
| | | e | 50 | 30 | - | | | | | | | | | | 100 |
| | 5* | β-hydroxyalkylamide A | | | | 5 | 9 | 8 | 13 | 15 | 5 | 10 | 5 | 15 | 5 |
| | | P-hydroxyalkylamide B | | | | | | | | | | | | | |
| | | Phenolic resin | | | | | | | | | | | | | |
| 2* | Baking temperature (°C) | | | | | 250 | 250 | 250 | 250 | 250 | 250 | 250 | 250 | 250 | 250 |
| | Baking time (second) | | | | | 60 | 60 | 60 | 60 | 60 | 60 | 60 | 60 | 60 | 60 |
| | Coating thickness (μm) | | | | | 9 | 9 | 9 | 9 | 9 | 9 | 9 | 9 | 9 | 9 |
| 3* | Curability | | | | | ◎ | ◎ | ◎ | ◎ | ◎ | × | × | Δ | ◎ | ○ |
| | Workability | | | | | ◎ | ◎ | ◎ | ○ | ○ | ◎ | ○ | × | × | × |

1*: Aqueous coating composition blend ratio
2*: Coating condition
3*: Evaluation
4*: Polyester resin
5*: Curing agent
Ref.Ex.: Reference Example

[Table 3]

| | | | Tg (°C) | Acid value (mgKOH/g) | Mn | Example | | | | | Reference Example | | |
|---|---|---|---|---|---|---|---|---|---|---|---|---|---|
| | | | | | | 11 | 12 | 13 | 14 | 15 | 4 | 5 | 6 |
| 1* | Polyester resin (A) | (A)-a | 46 | 50 | 3,000 | 50 | 50 | 60 | | | 100 | 100 | |
| | | (A)-b | 80 | 36 | 5,000 | | | | 60 | 80 | | | |
| | Polyester resin (B) | (B)-a | 80 | 23 | 8,000 | 50 | | | 40 | | | | |
| | | (B)-b | 40 | 17 | 8,500 | | 50 | | | | | | 100 |
| | | (B)-c | 52 | 5 | 17,000 | | | 40 | | | | | |
| | | (B)-d | -25 | 11 | 17,000 | | | | | 20 | | | |
| | | Acid value difference | | | | 27 | 33 | 45 | 13 | 25 | - | - | - |
| | | $Av_{mix}$(mgKOH/g) | | | | 36.5 | 33.5 | 32 | 30.8 | 31 | - | - | - |
| | | $Tg_{mix}$ (°C) | | | | 62.1 | 43 | 48.4 | 80 | 52.4 | - | - | - |
| | Curing agent | β-hydroxyalkylamide A | | | | 8 | 8 | 8 | 5 | 5 | 8 | 13 | 8 |
| 2* | Baking temperature (°C) | | | | | 250 | 250 | 250 | 250 | 250 | 250 | 250 | 250 |
| | Baking time (second) | | | | | 60 | 60 | 60 | 60 | 60 | 60 | 60 | 60 |
| | Coating thickness (μm) | | | | | 9 | 9 | 9 | 9 | 9 | 9 | 9 | 9 |
| 3* | Curability | | | | | A | A | B | A | A | A | A | C |
| | Workability | | | | | A | B | A | A | A | C | C | B |

1*: Aqueous coating composition blend ratio
2*: Coating condition
3*: Evaluation

Industrial Applicability:

The aqueous coating composition of the present invention can be suitably used as an inner surface coating or an outer surface coating for metal cans, can lids and the like, because the composition has excellent workability and is capable of forming a coating having favorable curability and corrosion resistance.

**Claims**

1.  An aqueous coating composition including: a polyester resin having an acid value of not less than 30 mgKOH/g and less than 70 mgKOH/g measured as indicated in the specification; and a curing agent having a functional group capable of crosslinking with a carboxyl group and that is a β-hydroxyalkylamide compound, wherein

    the polyester resin is either an acrylic unmodified polyester resin or an acrylic modified polyester resin containing an acrylic component of less than 10 mass%; and
    when two or more polyester resins having different acid values are blended for use as the polyester resin, the total of the values obtained by multiplying the acid value and the mass fraction of each polyester resin is set as the average acid value of the blend, and the average acid value of the blend is not less than 30 mgKOH/g and less than 70 mgKOH/g.

2.  The aqueous coating composition according to claim 1, wherein the β-hydroxyalkylamide compound is N,N,N',N'-tetrakis(2-hydroxyethyl)adipoamide and/or N,N,N',N'-tetrakis(2-hydroxypropyl)adipoamide.

3.  The aqueous coating composition as claimed in claim 1, wherein 1 to 20 parts by mass of a solid content of the curing agent is blended in 100 parts by mass of a solid content of the polyester resin.

4.  The aqueous coating composition according to claim 1, wherein the polyester resin is a mixed polyester resin containing a polyester resin (A) and a polyester resin (B) having an acid value lower than the acid value of the polyester resin (A), and the acid value of the polyester resin (A) and the polyester resin (B) differ from each other by not less than 5 mgKOH/g.

5.  The aqueous coating composition according to claim 4, wherein the acid value of the polyester resin (A) is 30 to 80 mgKOH/g, the acid value of the polyester resin (B) is not less than 5 mgKOH/g and less than 30 mgKOH/g, and a solid content weight ratio of the polyester resin (A) to the polyester resin (B) is (A) : (B) = 95:5 to 5:95.

6.  A coated metal sheet having a coating including the aqueous coating composition according to any one of claims 1 to 5.

7.  A metal container having a coating including the aqueous coating composition according to any one of claims 1 to 5.

8.  A metal lid having a coating including the aqueous coating composition according to any one of claims 1 to 5.

**Patentansprüche**

1.  Wässrige Beschichtungszusammensetzung, beinhaltend: ein Polyesterharz mit einer Säurezahl von nicht weniger als 30 mgKOH/g und weniger als 70 mgKOH/g, gemessen wie in der Patentschrift angegeben; und ein Härtungsmittel mit einer funktionellen Gruppe, die zu der Vernetzung mit einer Carboxylgruppe fähig ist und die eine β-Hydroxyalkylamid-Verbindung ist, wobei

    das Polyesterharz entweder ein unmodifiziertes Acrylpolyesterharz oder ein modifiziertes Acrylpolyesterharz ist, das eine Acrylkomponente von weniger als 10 Masse-% enthält; und
    wenn zwei oder mehr Polyesterharze mit unterschiedlichen Säurewerten für die Verwendung als das Polyesterharz gemischt werden, die Summe der Werte, die durch Multiplikation des Säurewertes und des Massenanteils jedes Polyesterharzes erhalten wird, als der durchschnittliche Säurewert der Mischung festgelegt wird, und der durchschnittliche Säurewert der Mischung nicht weniger als 30 mgKOH/g und weniger als 70 mgKOH/g beträgt.

2.  Wässrige Beschichtungszusammensetzung nach Anspruch 1, wobei die β-Hydroxyalkylamid-Verbindung N,N,N',N'-Tetrakis(2-hydroxyethyl)adipoamid und/oder N,N,N',N'-Tetrakis(2-hydroxypropyl)adipoamid ist.

3. Wässrige Beschichtungszusammensetzung nach Anspruch 1, wobei 1 bis 20 Masseteile eines Feststoffgehalts des Härtungsmittels in 100 Masseteile eines Feststoffgehalts des Polyesterharzes gemischt werden.

4. Wässrige Beschichtungszusammensetzung nach Anspruch 1, wobei das Polyesterharz ein gemischtes Polyesterharz ist, das ein Polyesterharz (A) und ein Polyesterharz (B) mit einer niedrigeren Säurezahl als die Säurezahl des Polyesterharzes (A) und die Säurezahl des Polyesterharzes (A) und des Polyesterharzes (B) um nicht weniger als 5 mgKOH/g voneinander unterschiedlich sind.

5. Wässrige Beschichtungszusammensetzung nach Anspruch 4, wobei die Säurezahl des Polyesterharzes (A) 30 bis 80 mgKOH/g beträgt, die Säurezahl des Polyesterharzes (B) nicht weniger als 5 mgKOH/g und weniger als 30 mgKOH/g beträgt, und das Gewichtsverhältnis des Feststoffgehalts des Polyesterharzes (A) zu dem Polyesterharz (B) (A) : (B) = 95 : 5 bis 5 : 95 ist.

6. Beschichtetes Metallblech mit einer Beschichtung, die die wässrige Beschichtungszusammensetzung nach einem der Ansprüche 1 bis 5 beinhaltet.

7. Metallbehälter mit einer Beschichtung, die die wässrige Beschichtungszusammensetzung nach einem der Ansprüche 1 bis 5 beinhaltet.

8. Metalldeckel mit einer Beschichtung, die die wässrige Beschichtungszusammensetzung nach einem der Ansprüche 1 bis 5 beinhaltet.

**Revendications**

1. Composition de revêtement aqueuse comprenant : une résine polyester ayant un indice d'acide d'au moins 30 mg de KOH/g et de moins de 70 mg de KOH/g mesuré comme indiqué dans la description ;
et un agent de durcissement ayant un groupe fonctionnel capable de se réticuler avec un groupe carboxyle et qui est un composé β-hydroxyalkylamide, dans laquelle

la résine polyester est soit une résine polyester acrylique non modifiée, soit une résine polyester acrylique modifiée contenant un composant acrylique inférieur à 10 % en masse ; et
lorsque deux ou plusieurs résines polyester ayant des indices d'acide différents sont mélangées pour être utilisées comme résine polyester, le total des valeurs obtenues en multipliant l'indice d'acide et la fraction massique de chaque résine polyester est fixé comme indice d'acide moyen du mélange, et l'indice d'acide moyen du mélange n'est pas inférieur à 30 mgKOH/g et inférieur à 70 mgKOH/g.

2. Composition de revêtement aqueuse selon la revendication 1, dans laquelle le composé β-hydroxyalkylamide est N,N,N',N'-tétrakis(2-hydroxyéthyl)adipoamide et/ou N,N,N',N'-tétrakis(2-hydroxypropyl)adipoamide.

3. Composition de revêtement aqueuse selon la revendication 1, dans laquelle 1 à 20 parties en masse d'une teneur en matières solides de l'agent de durcissement sont mélangées à 100 parties en masse d'une teneur en matières solides de la résine polyester.

4. Composition de revêtement aqueuse selon la revendication 1, dans laquelle la résine polyester est une résine polyester mixte contenant une résine polyester (A) et une résine polyester (B) ayant un indice d'acide inférieur à l'indice d'acide de la résine polyester (A), et l'indice d'acide de la résine polyester (A) et de la résine polyester (B) diffèrent l'un de l'autre d'au moins 5 mgKOH/g.

5. Composition de revêtement aqueuse selon la revendication 4, dans laquelle l'indice d'acide de la résine polyester (A) est de 30 à 80 mgKOH/g, l'indice d'acide de la résine polyester (B) n'est pas inférieur à 5 mgKOH/g et inférieur à 30 mgKOH /g, et un rapport pondéral de la teneur en matières solides de la résine polyester (A) par rapport à la résine polyester (B) est (A) : (B) = 95 : 5 à 5 : 95.

6. Tôle métallique revêtue ayant un revêtement comprenant la composition de revêtement aqueuse selon l'une quelconque des revendications 1 à 5.

**7.** Récipient métallique ayant un revêtement comprenant la composition de revêtement aqueuse selon l'une quelconque des revendications 1 à 5.

**8.** Couvercle métallique ayant un revêtement comprenant la composition de revêtement aqueuse selon l'une quelconque des revendications 1 à 5.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4228585 B
- JP 2003026992 A
- EP 3205494 A1
- US 2011195262 A1
- EP 0792908 A1
- EP 2857465 A1
- EP 2681260 A1

**Non-patent literature cited in the description**

- *CHEMICAL ABSTRACTS,* 6334-25-4
- *CHEMICAL ABSTRACTS,* 57843-53-5